# EUROPÄISCHE PATENTSCHRIFT

(11) **EP 2 908 094 B1**
(45) Veröffentlichungstag und Bekanntmachung des Hinweises auf die Patenterteilung: **01.03.2017**
(21) Anmeldenummer: 15455001.6
(22) Anmeldetag: 23.01.2015
(51) Int. Cl.: G01C 11/06, G03B 35/08

(54) **Verfahren zur Erstellung von Stereo-Digitalbildern**
Method for creating stereo digital images
Procédé de fabrication d'images numériques stéréo

(30) Priorität: 14.02.2014 AT 501122014
(43) Veröffentlichungstag der Anmeldung: 19.08.2015
(73) Patentinhaber: AIT Austrian Institute of Technology GmbH, 1220 Wien (AT)
(72) Erfinder: Zinner, Christian, 1220 Wien (AT); Mayer, Konrad, 1230 Wien (AT)
(74) Vertreter: Wildhack & Jellinek

(56) Entgegenhaltungen:
- WO-A1-2009/143319
- DE-A1- 19 836 303

## Beschreibung

Die Erfindung betrifft ein Verfahren zur Erstellung von Stereo-Digitalbildern gemäß dem Oberbegriff des Patentanspruchs 1 sowie eine Aufnahmeanordnung zur Erstellung Stereo-Digitalbildern gemäß dem Oberbegriff des Patentanspruchs 8. Weiters betrifft die Erfindung einen Datenträger gemäß Anspruch 14.

Aus dem Stand der Technik ist es bekannt, Aufnahmeanordnungen zu schaffen, die mehrere Kameras umfassen und mit denen die Erstellung dreidimensionaler Bilder möglich ist. Siehe z.B. die Schriften WO2009/143319 und DE19836303. In diesem Zusammenhang ist es ebenfalls bekannt, dass das Vorsehen einer weiteren Stereo-Basis, d.h. das Vorsehen eines größeren Abstands zwischen den an der Aufnahme der Stereo-Digitalbilder beteiligten Kameras, zu genaueren Detektionsergebnissen, insbesondere hinsichtlich der Tiefenauflösung, führt. Gerade bei weiten Stereo-Basen besteht jedoch das große Problem, dass die auf zumeist Trägern gelagerten Kameras aufgrund mechanischer Deformierungen der Träger zueinander wackeln, vibrieren oder sonst ihre relative Position oder Ausrichtung zueinander laufend ändern, sodass eine rasche Zuordnung von Strukturen innerhalb der einzelnen, aufgenommen Kamerabilder, z.B. über eine Einschränkung der Suche auf Punkte auf einander zugeordnete Epipolarlinien, äußerst schwierig bis unmöglich wird.

Aufgabe der Erfindung ist es daher, ein einfaches Verfahren bzw. eine einfache Stereo-Anordnung zu schaffen, die das vorstehend genannte Problem überwindet und unabhängig von der Aufhängung der Lagerung bzw. den zur Aufhängung der Kameras verwendeten Trägern ein stabiles Stereo-Digitalbild zur Verfügung stellt.

Die Erfindung löst diese Aufgabe bei einem Verfahren der eingangsgenannten Art mit dem kennzeichnenden Merkmal des Patentanspruchs 1. Erfindungsgemäß ist bei einem Verfahren zur Erstellung von Stereo-Digitalbildern mit zumindest zwei Kameras, die einen überlappenden Aufnahmebereich aufweisen, wobei die Kameras mit einem Referenzobjekt verbunden sind, wobei zumindest eine der Kameras mittels eines deformierbaren Trägers mit dem Referenzobjekt verbunden ist, und die gegebenenfalls vorhandenen übrigen Kameras starr mit dem Referenzobjekt verbunden sind, vorgesehen, dass die zumindest eine am Träger angeordnete Kamera mit einer Positionserkennungseinrichtung starr verbunden ist, wobei mit der Positionserkennungseinrichtung ein Abschnitt des Referenzobjekt abgebildet wird, der ein strukturiertes Helligkeitsmuster aufweist, dass mit der Positionserkennungseinrichtung ein Positionierungs-Digitalbild des Abschnitts erstellt wird, aufgrund der Position, Größe und Lage des Abbilds des strukturierten Helligkeitsmusters des Abbilds des Abschnitts im Positionierungs-Digitalbild die Relativposition und Ausrichtung der jeweiligen Positionserkennungseinrichtung sowie der jeweils mit ihr verbundenen Kamera zum Referenzobjekt ermittelt wird, dass für die auf einem Träger angeordneten Kameras jeweils ein Digitalbild erstellt wird, dem jeweils die Relativposition und Ausrichtung der das jeweilige Digitalbild erstellenden Kamera, insbesondere zum Zeitpunkt der Aufnahme zugeordnet wird, und für gegebenenfalls starr mit dem Referenzobjekt verbundene Kameras eine feste Ausrichtung und Relativposition gegenüber dem Referenzobjekt eingestellt wird, dass aufgrund der ermittelten Relativpositionen und Ausrichtungen der einzelnen Kameras die jeweiligen Relativposition und Ausrichtung der Kameras zueinander ermittelt wird, und dass die Relativposition und Ausrichtung der Kameras zueinander für die Bestimmung einer Stereobasis herangezogen und mit dieser Stereobasis ein dreidimensionales Abbild der von den Kameras abgebildeten Szene erstellt wird.

Eine bevorzugte Ausführungsform der Erfindung, bei der eine einfache Positionierung vorgenommen werden kann, sieht vor, dass als Positionserkennungseinrichtung eine Positionierungskamera verwendet wird, die auf den Abschnitt des Referenzobjektes gerichtet ist und dass das Positionierungs-Digitalbild mit der Positionserkennungseinrichtung erstellt wird.

Eine bevorzugte Ausführungsform der Erfindung, die ohne separate Positionierungskamera auskommt, sieht vor, dass als Positionserkennungseinrichtung ein Teilbereich des Sensors der Kamera sowie ein Spiegel verwendet wird, der mit der jeweiligen Kamera starr verbunden ist, wobei die Sehstrahlen der jeweiligen Kamera vom Spiegel in den Teilbereich des Sensors der jeweiligen Kamera gelenkt werden, wobei das Positionierungs-Digitalbild vom Teilbereich des Sensors der jeweiligen Kamera erstellt wird und das Digitalbild vom restlichen Teil des Sensors jeweiligen Kamera erstellt wird.

Bei Positionserkennungseinrichtungen, die aufgrund der Anordnung der Kameras auf keinen gemeinsamen Punkt auf dem Referenzobjekt gerichtet sind, kann vorzugsweise vorgesehen sein, dass die Relativposition und Ausrichtung der Kameras zueinander unter Berücksichtigung der ermittelten Relativposition und Ausrichtung zu jeweils einem Abschnitt auf dem Referenzbereich sowie unter Berücksichtigung der als unveränderlich angenommenen Relativposition und Ausrichtung der Abschnitte auf dem Grundkörper zueinander ermittelt wird, und
dass insbesondere bei der Bestimmung der Ausrichtung der beiden Kameras die Relativposition und Ausrichtung des jeweiligen Spiegels oder der jeweiligen Positionierungskamera gegenüber der jeweiligen Kamera herangezogen wird.

Besondere Weiterbildungen der Erfindung, die bei einem Flugzeug Anwendung finden, sehen vor als Träger die beiden Flügel eines Flugzeugs herangezogen werden, auf denen jeweils die Kameras montiert sind und dass als Abschnitte Abschnitte am als Referenzbereich fungierenden Rumpf des Flugzeugs herangezogen werden, die jeweils mit einem strukturierten Helligkeitsmuster versehen sind.

Hierbei kann insbesondere zum Schutz der Kameras vorgesehen sein, dass die Kameras und oder die Positionierungskameras im Inneren des Flügels angeordnet werden und die Digitalbilder, und gegebenenfalls auch die Positionierungs-Digitalbilder, durch Fenster im Flügel hindurch aufgenommen werden.

Eine besonders genaue Detektion von raschen Vibrationen und Schwingungen, die mittels Positionierungskameras nur schwer erkennbar sind, kann erreicht werden, indem zumindest eine der auf einem Träger befestigten Kameras ein Beschleunigungsdetektor zugeordnet und mit dieser starr verbunden ist, wobei der Beschleunigungsdetektor eine Veränderung der Position und/oder Ausrichtung der Kamera misst und dass die so ermittelte Positionsänderung oder Änderung der Ausrichtung oder jeweiligen Ausrichtung und/oder Relativposition überlagert und bei der Erstellung des Stereo-Abbildes herangezogen wird.

Weiters löst die Erfindung die Aufgabe bei einer Aufnahmeanordnung der eingangs genannten Art mit den kennzeichnenden Merkmalen des Patentanspruchs 8. Bei einer Aufnahmeanordnung zur Erstellung von Stereo-Digitalbildern mit zumindest zwei Kameras, einem Referenzobjekt, wobei die Kameras einen überlappenden Aufnahmebereich aufweisen und mit dem Referenzobjekt verbunden sind, wobei zumindest eine der Kameras mittels eines deformierbaren Trägers mit dem Referenzobjekt verbunden ist, und die gegebenenfalls vorhandenen übrigen Kameras starr mit dem Referenzobjekt verbunden sind, ist vorgesehen, dass - dass die zumindest eine am Träger angeordnete Kamera eine Positionserkennungseinrichtung aufweist und mit dieser starr verbunden ist, wobei die Positionserkennungseinrichtung auf einen Abschnitt des Referenzobjektes gerichtet ist, der ein strukturiertes Helligkeitsmuster aufweist, dass die Positionserkennungseinrichtung zur Erstellung eines Positionierungs-Digitalbilds des Abschnitts ausgebildet ist, dass die Positionserkennungseinrichtung bei Vorliegen eines Positionierungs-Digitalbilds aufgrund der Position, Größe und Lage des Abbilds des strukturierten Helligkeitsmusters des Abbilds des Abschnitts im Positionierungs-Digitalbild die Relativposition und Ausrichtung der jeweiligen Positionserkennungseinrichtung sowie der jeweils mit ihr verbundenen Kamera zum Referenzobjekt ermittelt, dass die, insbesondere gleichzeitig erstellten, Signale der Positionserkennungseinrichtung sowie der Kameras einer Stereo-Einheit zugeführt sind und für gegebenenfalls starr mit dem Referenzobjekt verbundene Kameras eine feste Ausrichtung und Relativposition gegenüber dem Referenzobjekt der Stereo-Einheit zugeführt sind, und dass die Stereo-Einheit bei Vorliegen der ermittelten Relativpositionen und Ausrichtungen der einzelnen Kameras die jeweiligen Relativposition und Ausrichtung der Kameras zueinander ermittelt, die Relativposition und Ausrichtung der Kameras zueinander für die Bestimmung einer Stereobasis heranzieht und mit dieser Stereobasis ein dreidimensionales Abbild der von den Kameras abgebildeten Szene erstellt.

Eine bevorzugte Ausführungsform der Erfindung, bei der eine einfache Positionierung vorgenommen werden kann, sieht vor, dass die Positionserkennungseinrichtung als Positionierungskamera ausgebildet ist, die auf den Abschnitt des Referenzobjektes gerichtet ist und dass die Positionserkennungseinrichtung das Positionierungs-Digitalbild erstellt.

Eine bevorzugte Ausführungsform der Erfindung, die ohne separate Positionierungskamera auskommt, sieht vor, dass die Positionserkennungseinrichtung einen Teilbereich des Sensors der Kamera sowie ein Spiegel aufweist, der mit der jeweiligen Kamera starr verbunden ist, wobei die Sehstrahlen der jeweiligen Kamera vom Spiegel in den Teilbereich des Sensors der jeweiligen Kamera gerichtet sind, - wobei gegebenenfalls die Positionserkennungseinrichtung das Positionierungs-Digitalbild vom Teilbereich des Sensors der jeweiligen Kamera erstellt.

Eine bevorzugte Positionierung der Kameras zur Erstellung dreidimensionaler Objekte kann bei Flugzeugen vorgenommen werden, indem die beiden Flügel eines Flugzeugs die Träger bildet und auf diesen die Kameras montiert sind und dass die Abschnitte durch Abschnitte am Rumpf des Flugzeugs ausgebildet sind, die jeweils mit ein strukturiertes Helligkeitsmuster aufweisen.

Hierbei kann insbesondere zum Schutz der Kameras vorgesehen sein, dass die Positionierungskameras im Inneren des Flügels des Flugzeugs angeordnet sind, wobei für jede der Kameras jeweils ein Fenster im Flügel vorgesehen ist und der Aufnahmebereich durch das Fenster hindurchtritt.

Eine besonders genaue Detektion von raschen Vibrationen und Schwingungen, die mittels Positionierungskameras nur schwer erkennbar sind, kann erreicht werden, indem zumindest einer der auf einem Träger befestigten Kameras ein Beschleunigungsdetektor angeordnet und mit dieser starr verbunden ist, wobei der Beschleunigungsdetektor eine Veränderung der Position und/oder Ausrichtung der Kamera misst und dass die Stereo-Einheit die so ermittelte Positionsänderung oder Änderung der Ausrichtung oder jeweiligen Ausrichtung und/oder Relativposition überlagert und bei der Erstellung des Stereo-Digitalbilds heranzieht.

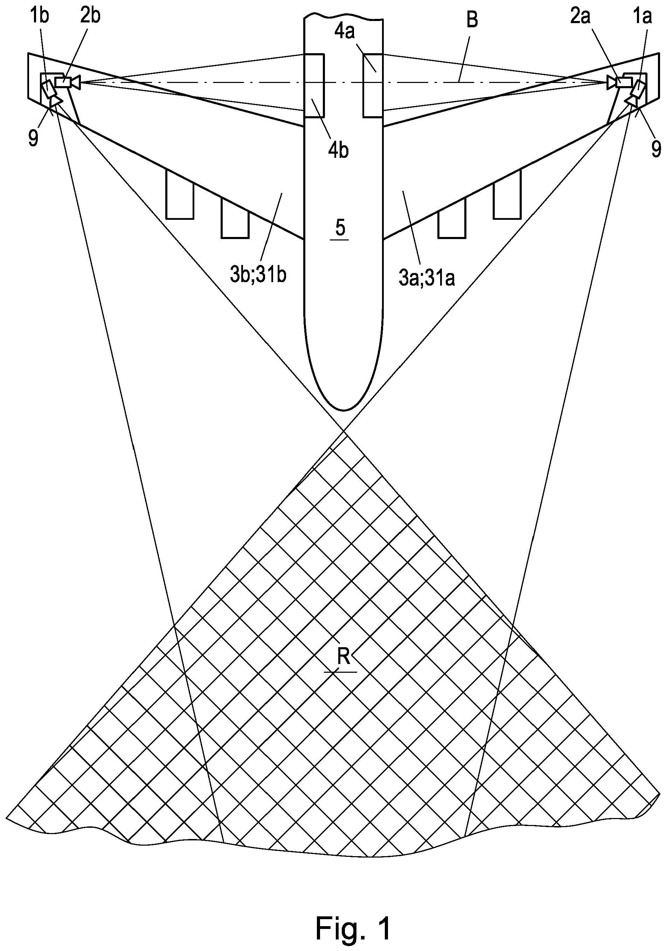

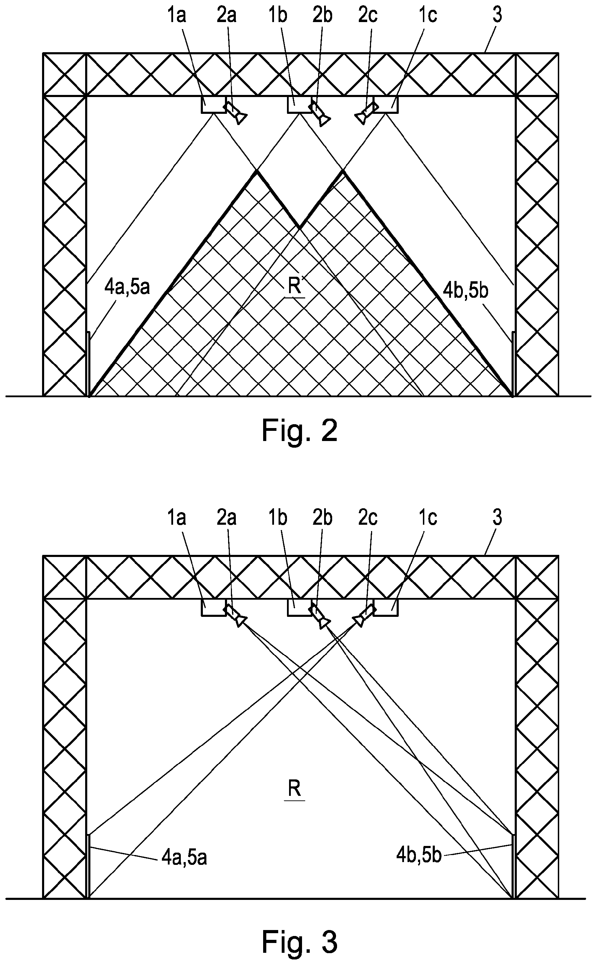

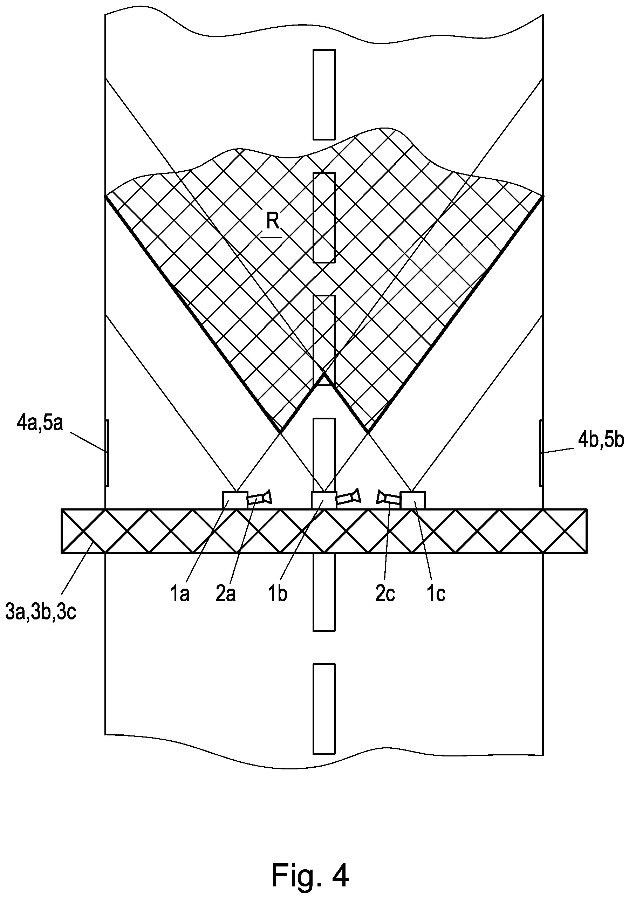

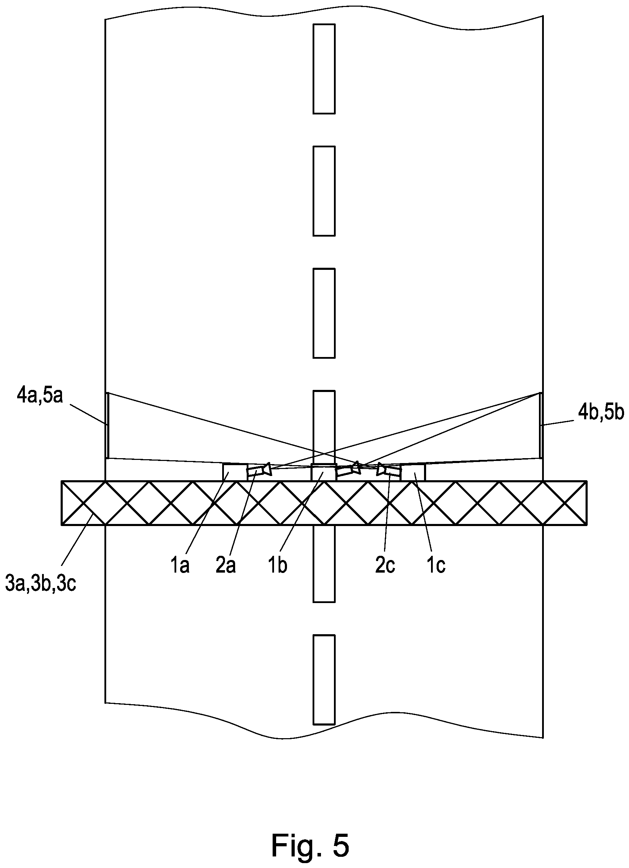

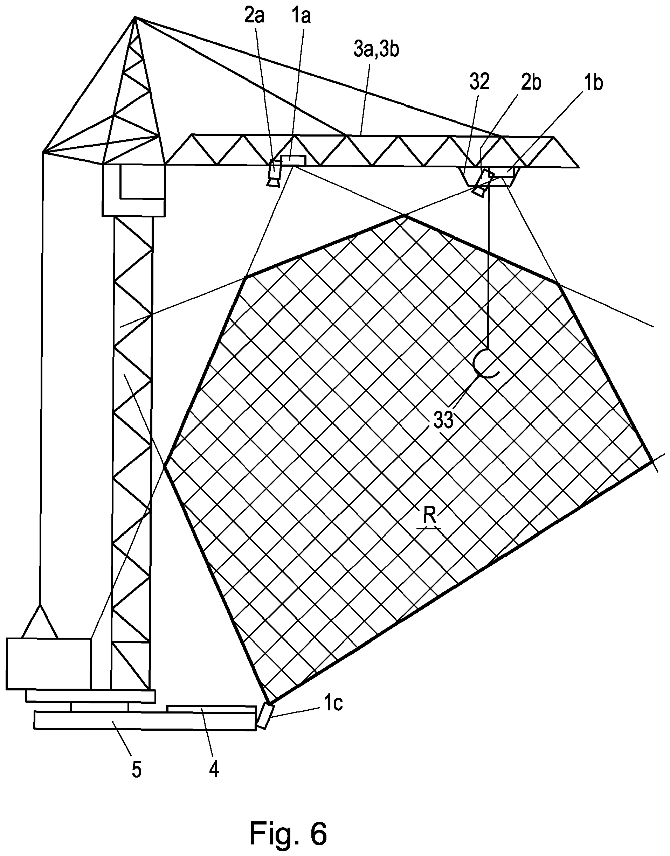

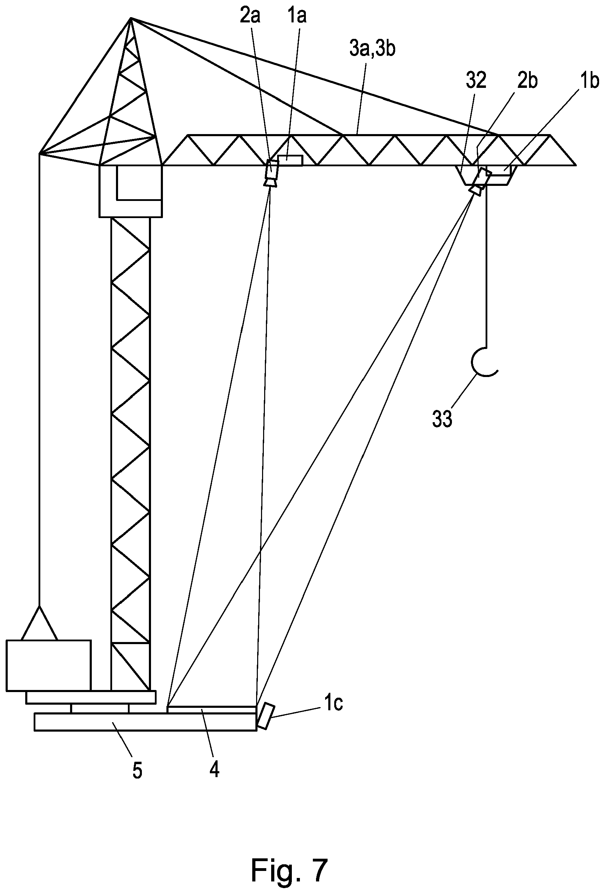

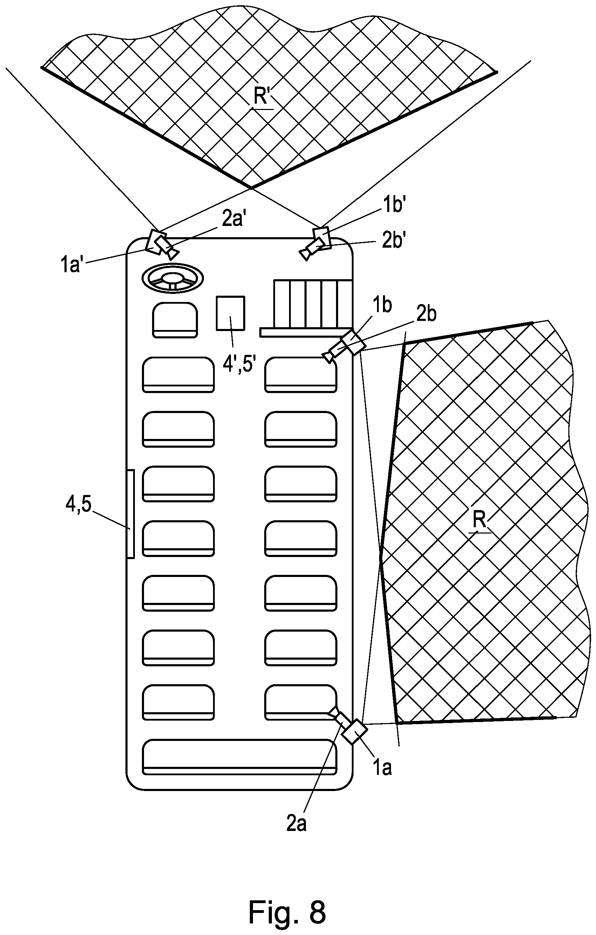

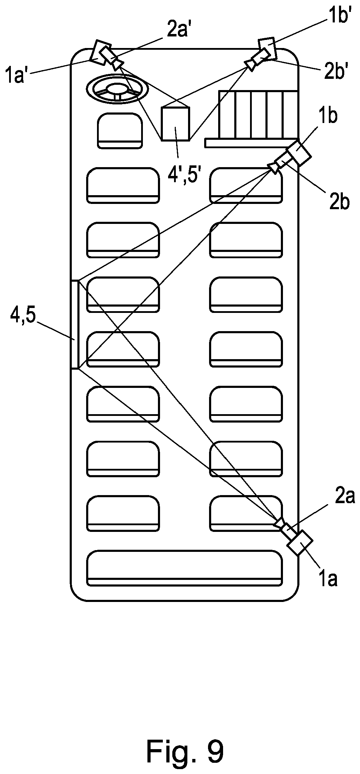

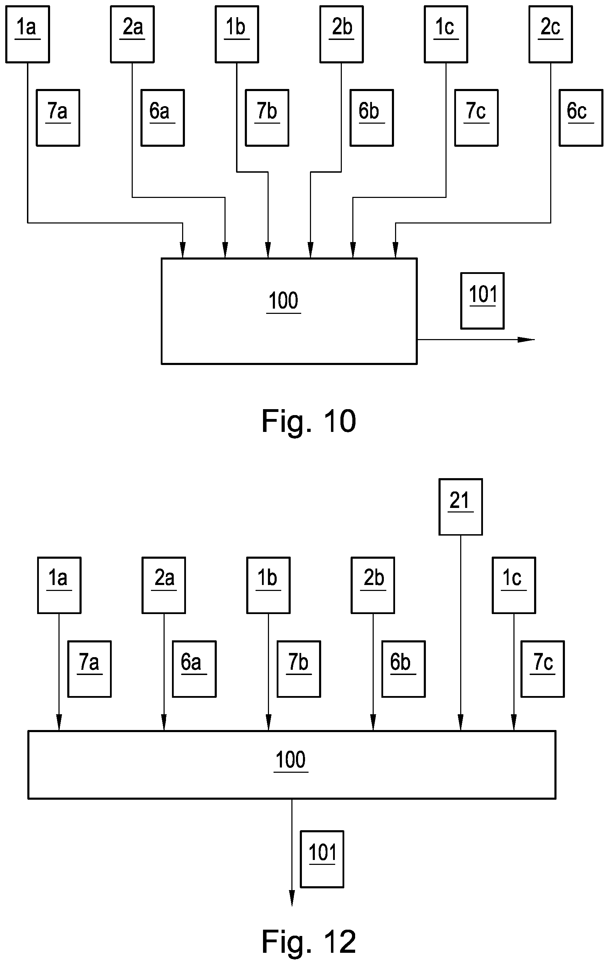

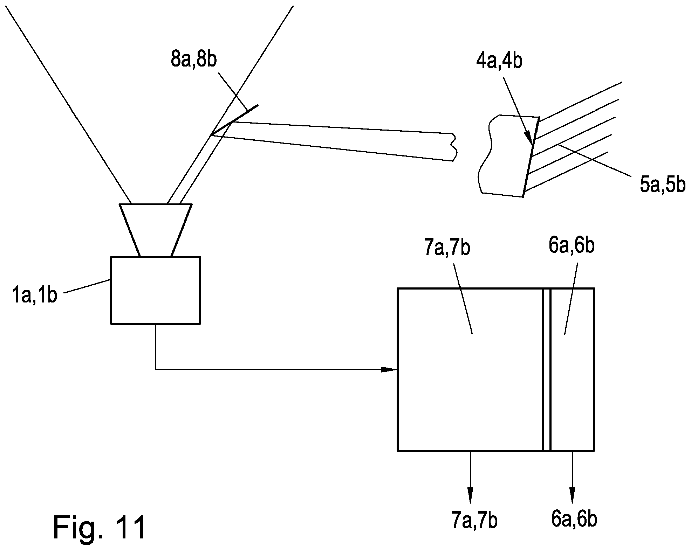

Mehrere bevorzugte Ausführungsbeispiele der Erfindung sind in den folgenden Zeichnungsfiguren dargestellt. In **Fig. 1** ist eine erste Ausführungsform der Erfindung dargestellt, die eine Anwendung der Erfindung zur Stereo-Erkennung auf einem Flugzeug zeigt. **Fig. 2** und **Fig. 3** zeigen ein über einer Straße angeordnetes Portal, wobei Kameras auf diesem Portal angeordnet und auf die Straße gerichtet sind. **Fig. 4** und **Fig. 5** zeigen das Portal von oben. **Fig. 6** und **Fig. 7** zeigen einen Kran, bei dem Kameras auf dem Ausleger sowie auf der Laufkatze und im Bereich der Basis des Krans angeordnet sind. **Fig. 8** und **Fig. 9** zeigt einen Reisebus, bei dem Kameras zur Erstellung von Stereo-Digitalbildern im Seitenbereich und im Frontbereich angeordnet sind. In **Fig. 11** ist eine Ausführungsvariante einer Kamera mit einer Positionierungseinrichtung dargestellt, bei der ein Teil des mit der Kamera aufgenommen Bildes über einem Spiegel auf einen Abschnitt auf dem Referenzobjekt umgelenkt wird. **Fig. 10** zeigt eine schematische Anordnung der Kameras der Positionserkennungseinrichtungen und einer Steuereinheit bei der Erstellung eines Stereo-Digitalsbilds. In **Fig. 12** ist eine Ausführungsvariante der Erfindung dargestellt, bei der einer der Kameras ein Beschleunigungsdetektor zugewiesen ist und eine andere Kamera direkt und bewegungsstarr mit einem Referenzobjekt verbunden ist.

**Fig. 1** zeigt ein Flugzeug, dessen Rumpf im wesentlichen in sich verwindungs- und deformationsfrei ausgebildet ist. Von diesem Rumpf stehen zwei Flügel 3a, 31a; 3b; 31b ab, auf denen jeweils eine Kamera 1a, 1b befestigt ist. Die Kameras 1a, 1b befinden sich im Inneren des Flügels 3a; 31a; 3b; 31b. Der Aufnahmebereich der beiden Kameras 1a, 1b tritt durch das Fenster 9 im Flügel 31a, 31b hindurch. Die beiden Kameras 1a, 1b weisen einen gemeinsamen Aufnahmebereich R, in dem die jeweiligen Aufnahmebereiche der Kameras 1a, 1b miteinander überlappen, auf. Bewegungsstarr mit den beiden Kameras 1a, 1b sind zwei Positionierungskameras 2a, 2b verbunden, die auf Abschnitte 4a, 4b des Rumpfs des Flugzeuges gerichtet sind. Der Rumpf fungiert in diesem Zusammenhang als Referenzobjekt 5, das für die weitere Ermittlung der Stereo-Digitalbilder 9 als in sich bewegungsstarr angenommen wird. Durch die hier dargestellte Anordnung haben die beiden Kameras 1a, 1b zueinander einen großen Abstand. Die Strecke zwischen den beiden Kameras 1a, 1b wird im Zusammenhang mit der Aufnahme der Bilder als Stereo-Basis B bezeichnet.

In der Regel sind die Flügel 3, 31b beim Flug des Flugzeuges enormen Kräften ausgesetzt und werden während der Flugmanöver durchaus stark deformiert, sodass die genaue Relativposition der beiden Kameras 1a, 1b in Bezug zum Rumpf des Flugzeuges bzw. zueinander nicht ohne weiteres bekannt ist und übliche Stereo-Matching Verfahren scheitern. Die Abschnitte 4a, 4b auf den Rumpf bzw. Referenzobjekt 5 auf dem Flugzeug sind derart gewählt, dass auf Ihnen ein strukturiertes Helligkeitsmuster, beispielsweise ein Aufdruck, eine konkrete Anordnung von Nieten oder anderen Befestigungsmitteln, Fenstern oder Ähnliches erkennbar ist. Darüber hinaus ist die konkrete relative Lage der beiden Abschnitte 4a, 4b zueinander bekannt. Die beiden Positionierungskameras 2a , 2b erstellen zu jedem Zeitpunkt, zu dem auch die beiden Kameras 1a, 1b ein Bild erstellen ein Positionierungsdigitalbild des Abschnittes. Aufgrund der Position, Größe und Lage des Abbildes des strukturierten Helligkeitsmusters des Abbildes des Abschnittes 4a, 4b im Positionierungsdigitalbild 6a, 6b kann die Relativposition und Ausrichtung der jeweiligen Positionierungskamera 2a, 2b und damit auch die jeweilige Relativposition und Ausrichtung der mit ihr starr verbundenen Kamera 1a, 1 b zum Referenzobjekt 5, d.h. im vorliegenden Fall zum Rumpf des Flugzeuges ermittelt werden. Es steht folglich zu jedem Zeitpunkt, zu dem ein Bild erstellt wurde, auch die jeweilige Relativposition und Ausrichtung der jeweiligen das Digitalbild 7a, 7b erstellenden Kamera 1a, 1b zum Referenzobjekt 5 zur Verfügung. Aufgrund der ermittelten Relativpositionen und Ausrichtungen der beiden Kameras 1a, 1b ist es nunmehr relativ einfach, die Epipolargeoemtrie der beiden Kameras 1 a, 1b zu ermitteln und somit ein einfaches Punkt-Matching zu erreichen, das dem jeweiligen Stereo-Bilderkennungsalgorithmus vorgeschaltet ist. Die Relativposition und Ausrichtung der Kameras 1a, 1b zueinander wird für die Bestimmung des Stereo-Basis B herangezogen und es wird mit dieser Stereo-Basis B ein dreidimensionales Abbild der von den Kameras 1a, 1b abgebildeten Szene erstellt.

In **Fig. 2** bis **Fig. 5** ist eine weitere Ausführungsform der Erfindung dargestellt, bei der dreidimensionale Abbilder von fahrenden Fahrzeugen auf einer Straße erstellt werden. Hierfür ist, wie in **Fig. 2** dargestellt, ein Portal 3 vorgesehen, das sich über eine Fahrbahn erstreckt. Im oberen Bereich des Portals 3 sind drei Kameras 1a, 1b, 1c sowie drei den jeweiligen Kameras 1a, 1b, 1c zugeordnete Positionierungskameras 2a, 2b, 2c angeordnet. Das Portal ist im vorliegenden Ausführungsbeispiel Träger für sämtliche der Kameras 1a, 1b, 1c, wobei jedoch aufgrund der inneren Verwindungen des Portals 3 die genaue Position der einzelnen Kameras 1a, 1b, 1c zueinander nicht bekannt ist. Wie bereits im vorigen Ausführungsbeispiel der Erfindung dargestellt, sind **(****Fig. 3****)** die Positionierungskameras 2a, 2b, 2c jeweils auf feststehende Referenzobjekte 5a, 5b bzw. auf diesen befindliche Abschnitte 4a, 4b gerichtet oder entgegen der Fahrtrichtung ausgerichtet. **Fig. 4** und **Fig. 5** zeigen die Ausrichtung der Kameras 1a, 1b, 1c in Richtung des Verlaufs der Straße.

In den **Fig. 6** und **Fig. 7** ist eine weitere Ausführungsform der Erfindung dargestellt, wobei drei Kameras 1a, 1b, 1c zur Erstellung von Stereo-Bildern im Bereich eines Krans angeordnet sind. Eine erste Kamera 1a befindet sich auf dem Ausleger 3a des Krans, eine zweite Kamera 1b befindet sich auf der Laufkatze 32 des Krans und eine dritte Kamera 1c befindet sich auf der Basis 5 des Krans. Den beiden Kameras 1a, 1b ist jeweils eine Positionierungskamera 2a, 2b zugeordnet, die auf einen Abschnitt 4 auf der Basis 5 des Krans, die als Referenzobjekt 5 fungiert, gerichtet sind. Die Kamera 1c, die sich unmittelbar auf der Basis 5 des Krans befindet, weist keine Positionierungskamera auf. Ihre Position gegenüber der Basis 5 des Krans kann als von vornherein bekannt und gegeben angesehen werden. Die auf der Laufkatze 32 befindliche Positionierung der Kamera 2b weist einen größeren Aufnahmebereich als die fix auf dem Ausleger positionierte Positionierungskamera 2a auf, da aufgrund der Bewegung der Laufkatze gegenüber dem Ausleger 3a des Krans sich der Abschnitt an unterschiedlichen Bereiche im Bild befinden kann. Im vorliegenden Fall ist es von Vorteil, wenn ein möglichst großer Bereich, innerhalb dessen sich der Haken 33 des Krans befinden kann, im Aufnahmebereich R aller drei Kameras 1a, 1b, 1c befindet.

In Fig. 8 ist ein allgemein bekannter Reisebus dargestellt, der mit jeweils einer Stereo-Überwachungseinheit für den Bereich vor dem Bus bzw. seitlich rechts am Bus ausgestattet ist. Wesentliches Problem bei der Installation von Stereo-Aufnahmeanordnungen in Bussen ist, dass die Karosserie eines Busses in sich gewissen Verwindungen und Deformationen unterliegt, die abhängig von Fahrtmanövern und Fahrtwind zu durchaus beachtlichen Abweichungen der Kamerapositionen und Ausrichtungen führen kann, sodass eine Aufnahme von Stereo-Digitalbildern unmöglich wird. In dem dargestellten Reisebus sind zwei voneinander unabhängige Stereo-Aufnahmeanordnungen dargestellt.

Die erste der beiden Stereo-Aufnahmeanordnungen umfasst zwei Kameras 1a, 1b, die seitlich am Bus angeordnet sind und Bilder des Bereiches seitlich rechts vom Bus - gesehen in Fahrtrichtung - erstellen. Darüber hinaus sind den beiden Kameras 1a, 1b zwei Positionierungskameras 2a, 2b zugeordnet, die starr mit ihrer jeweils zugeordneten Kamera 1a, 1b verbunden sind und auf einen Abschnitt 4 im Inneren des Reisebusses gerichtet sind. Dieser Abschnitt 4 befindet sich auf einem Teilbereich der Seitenwand des Busses, der in diesem Zusammenhang als Referenzobjekt 5 fungiert. Alternativ können auch andere Punkte im Bus als Referenzobjekte 5 herangezogen werden, wobei darauf zu achten ist, dass dieses Referenzobjekt 5 mit dem Bus möglichst starr verbunden ist.

Der in **Fig. 8** dargestellte Reisebus weist darüber hinaus auch noch einen nach vorne gerichtete Stereo-Aufnahmeanordnung auf, die wiederum zwei Kameras 1a', 1b' umfasst, die nach vorne gerichtet sind und einen gemeinsamen überlappenden Aufnahmebereich R' aufweisen. Beiden Kameras 1a', 1b' ist wiederum jeweils eine Positionierungskamera 2a', 2b' zugeordnet, die auf einen Abschnitt 4' an der Decke des Busses gerichtet sind, wobei die Decke des Busses, an dem sich der Abschnitt 4', als Referenzobjekt 5' dient.

In **Fig. 11** ist eine alternative Ausführungsform einer Positionierungseinrichtung 2a, 2b dargestellt, die für sämtliche vorstehend genannten Anwendungsbeispiele der Erfindung verwendet werden kann. In den vorstehend genannten Ausführungsbeispielen stets zwei getrennte und miteinander starr verbundene Kameras 1a, 1b, nämlich eine Kamera 1a, 1b, 1c und eine dieser Kamera 1a, 1b, 1c zugeordnete Positionierungskamera 2a, 2b, 2c, verwendet. Es ist jedoch auch möglich, das Bild der Kamera 1a, 1b, 1c teilweise zur Abbildung der Szene und andererseits zur Detektion der Position der Kamera 1a, 1b, 1c zu verwenden. In diesem bevorzugten Ausführungsbeispiel der Erfindung befindet sich im Aufnahmebereich der Kamera 1a, 1b ein Spiegel 8a, 8b, der einen Teilbereich des Sensors der jeweiligen Kamera auf den Abschnitt 4a, 4b des Referenzobjektes 5a, 5b umlenkt. Das von der Kamera 1a, 1b erstellte Bild ist ebenfalls in **Fig. 11** dargestellt und zeigt zwei Teilbereiche, nämlich einen Teilbereich, der das zur Erstellung der Szene heranzuziehende Digitalbild 7a und 7b erstellt und einen zweiten Teilbereich, der den Abschnitt 4 darstellt und der im Folgenden als eigenes Positionierungs-Digitalbild 6a, 6b weiter behandelt wird. Das von der Kamera 1a, 1b erstellte Bild wird geteilt, wobei der Teilbereich, der über den Spiegel 8a, 8b umgelenkt wurde, als Positionierungsdigitalbild 6a, 6b, der übrige Teil als Digitalbild 7a, 7b an die Steuereinheit 100 (**Fig.** 10) weitergeleitet wird.

In **Fig. 10** ist eine Stereoeinheit 100 dargestellt, der die einzelnen von den Kameras 1a, 1b, 1c erstellten Digitalbilder 7a, 7b zugeführt sind. Weiters sind auch die Positionserkennungseinrichtungen 2a, 2b dargestellt, die jeweils ein Positionierungsdigitalbild 6a, 6b, 6c erstellen und der Aufnahmeanordnung zuführen. Die Stereoeinheit 100 ermittelt zunächst aufgrund der ihr zugeführten Positionierungsdigitalbilder 6a, 6b, 6c die Relativposition an der Ausrichtung der einzelnen Positionserkennungseinrichtungen 2a, 2b, 2c zum Referenzobjekt 5. Bei Vorliegen der ermittelten Relativpositionen und Ausrichtungen der einzelnen Kameras 1a, 1b, 1c kann jeweils zwischen den einzelnen Kameras 1a, 1b, 1c eine Stereobasis B ermittelt und so auf einfache Weise ein dreidimensionales Abbild der von den Kameras 1a, 1b, 1c abgebildeten Szene erstellt werden.

Eine weitere Ausführungsform der Stereoeinheit 100 ist in **Fig. 12** schematisch dargestellt. Diese kann insbesondere in Kombination mit dem in **Fig. 6** und **Fig. 7** dargestellten Kran vorteilhaft verwendet werden. Die Aufnahme und Weiterverarbeitung der mittels der ersten Kamera 1a sowie der ersten Positionierungskamera 2a erstellten Bilder entspricht dabei der Weiterverarbeitung wie bei der in **Fig. 10** dargestellten Aufnahmeanordnung. Aufgrund der zusätzlichen Schwingungseinflüsse, die mit der Verschiebung der Laufkatze 32 gegenüber dem Ausleger 3a erfolgt, unterliegt das von der zweiten Kamera 1b bzw. der zweiten Positionierungskamera 2b erstellte Bild sowie die beiden Kameras 1b, 2b selbstständigen Vibrationen und Schwingungen. Eine zuverlässliche Detektion ausschließlich mittels der Positionierungskamera 2b ist in vielen Fällen, insbesondere bei ständigen Schwinungen, schwer möglich. Aus diesem Grund wird mit der zweiten Positionierungskamera 2b bzw. mit der zweiten Kamera 1b ein Beschleunigungsdetektor 21 verbunden, der kurzfristige rasche und mit geringen Bewegungsweiten verbundene Änderungen der Relativposition und Ausrichtung der Kamera 1b bzw. der Positionierungskamera 2b rasch und zuverlässig detektiert. Das von dem Beschleunigungsdetektor 21 erstellte Positionssignal wird der von der Positionierungskamera 2b erstellten Relativposition überlagert, insgesamt wird hierdurch die Positionsdetektion genauer und das Matching der mittels der Kameras 1a, 1b erstellten Bilder einfach möglich. Der in **Fig. 6** bzw. **Fig. 7** dargestellten Kamera 1c ist im vorliegenden Ausführungsbeispiel der Erfindung keine Positionserkennungseinrichtung 2 zugeordnet, da diese dritte Kamera 1c unmittelbar mit dem Referenzobjekt 5 verbunden ist. In diesem Fall reicht es auch, die genaue Position der Kamera gegenüber dem Referenzobjekt 5 bzw. dem Abschnitt 4 auf dem Referenzobjekt zu kennen, um eine entsprechende Positionsdetektion der Kamera zu ermöglichen und damit ein Stereo-Matching zu ermöglichen.

Bei allen Ausführungsbeispielen ermitteln die Positionierungskameras 2a, 2b Positionierungsdigitalbilder 6a, 6, mit denen die jeweilige Position und Ausrichtung der Positionierungskamera und damit der mit ihr fest verbundenen Kamera 1a, 1b gegenüber dem Referenzobjekt 5 bzw. dem auf dem Referenzobjekt 5 befindlichen Abschnitt 4 bestimmbar ist. Da mit dieser Konfiguration die jeweilige gegenseitige Lage und Ausrichtung der Kameras 1a, 1b, 1c bekannt ist, können mit einfachen Mitteln bekannte Stereo-Matching-Verfahren durchgeführt und ein dreidimensionales Abbild des Bereichs R erstellt werden.

## Patentansprüche

1. Verfahren zur Erstellung von Stereo-Digitalbildern (9) mit zumindest zwei Kameras (1a, 1b), die einen überlappenden Aufnahmebereich aufweisen, wobei die Kameras (1a, 1b) mit einem Referenzobjekt (5) verbunden sind, wobei zumindest eine der Kameras mittels eines deformierbaren Trägers (3a, 3b) mit dem Referenzobjekt (5) verbunden ist, und die gegebenenfalls vorhandenen übrigen Kameras starr mit dem Referenzobjekt (5) verbunden sind,
**dadurch gekennzeichnet,**
- **dass** die zumindest eine am Träger (3a, 3b) angeordnete Kamera (1) mit einer Positionserkennungseinrichtung (2a, 2b) starr verbunden ist, wobei mit der Positionserkennungseinrichtung (2a, 2b) ein Abschnitt (4) des Referenzobjekts (5) abgebildet wird, der ein strukturiertes Helligkeitsmuster aufweist,
- **dass** mit der Positionserkennungseinrichtung (2a, 2b) ein Positionierungs-Digitalbild (6) des Abschnitts (4) erstellt wird,
- aufgrund der Position, Größe und Lage des Abbilds des strukturierten Helligkeitsmusters des Abbilds des Abschnitts (4) im Positionierungs-Digitalbild (6a, 6b) die Relativposition und Ausrichtung der jeweiligen Positionserkennungseinrichtung (2a, 2b) sowie der jeweils mit ihr verbundenen Kamera (1 a, 1 b) zum Referenzobjekt (5) ermittelt wird,
- **dass** für die auf dem Träger (3a, 3b) angeordneten Kameras (1a, 1b) jeweils ein Digitalbild (7a, 7b) erstellt wird, dem jeweils die Relativposition und Ausrichtung der das jeweilige Digitalbild (7a, 7b) erstellenden Kamera (1a, 1b), insbesondere zum Zeitpunkt der Aufnahme zugeordnet wird, und für gegebenenfalls starr mit dem Referenzobjekt (5) verbundene Kameras eine feste Ausrichtung und Relativposition gegenüber dem Referenzobjekt (5) eingestellt wird,
- **dass** aufgrund der ermittelten Relativpositionen und Ausrichtungen der einzelnen Kameras (1a, 1b) die jeweiligen Relativposition und Ausrichtung der Kameras (1a, 1b) zueinander ermittelt wird, und
- **dass** die Relativposition und Ausrichtung der Kameras (1a, 1b) zueinander für die Bestimmung einer Stereobasis herangezogen und mit dieser Stereobasis ein dreidimensionales Abbild der von den Kameras (1a, 1b) abgebildeten Szene erstellt wird.

2. Verfahren nach Anspruch 1, **dadurch gekennzeichnet, dass** als Positionserkennungseinrichtung (2a, 2b) eine Positionierungskamera (2a, 2b) verwendet wird, die auf den Abschnitt (4) des Referenzobjektes (5) gerichtet ist und dass das Positionierungs-Digitalbild (6) mit der Positionserkennungseinrichtung (2a, 2b) erstellt wird.

3. Verfahren nach Anspruch 1, **dadurch gekennzeichnet, dass** als Positionserkennungseinrichtung (2a, 2b) ein Teilbereich (9) des Sensors der Kamera (1) sowie ein Spiegel (8a, 8b) verwendet wird, der mit der jeweiligen Kamera (1a, 1b) starr verbunden ist, wobei die Sehstrahlen der jeweiligen Kamera (1a, 1 b) vom Spiegel (8) in den Teilbereich (70a, 70b) des Sensors der jeweiligen Kamera (1a, 1 b) gelenkt werden, wobei das Positionierungs-Digitalbild vom Teilbereich (70a, 70b) des Sensors der jeweiligen Kamera (1a, 1b) erstellt wird und das Digitalbild (7a, 7b) vom restlichen Teil (71 a, 71 b) des Sensors jeweiligen Kamera (1 a, 1 b) erstellt wird.

4. Verfahren nach einem der vorangehenden Ansprüche, **dadurch gekennzeichnet, dass** die Relativposition und Ausrichtung der Kameras (1a, 1b) zueinander unter Berücksichtigung der ermittelten Relativposition und Ausrichtung (1a) zu jeweils einem Abschnitt (4a, 4b) auf dem Referenzobjekt (5) sowie unter Berücksichtigung der als unveränderlich angenommenen Relativposition und Ausrichtung der Abschnitte (4a, 4b) auf dem Referenzobjekt (5) zueinander ermittelt wird, und dass insbesondere bei der Bestimmung der Ausrichtung der beiden Kameras (1a, 1 b) die Relativposition und Ausrichtung des jeweiligen Spiegels (8a, 8b) oder der jeweiligen Positionierungskamera (2a, 2b) gegenüber der jeweiligen Kamera (1 a, 1 b) herangezogen wird.

5. Verfahren nach einem der vorangehenden Ansprüche, **dadurch gekennzeichnet, dass** als Träger (3a, 3b) die beiden Flügel (31 a, 31b) eines Flugzeugs herangezogen werden, auf denen jeweils die Kameras (1a, 1b) montiert sind und dass als Abschnitte (4a, 4b) Abschnitte (4a, 4b) am als Referenzobjekt (5) fungierenden Rumpf des Flugzeugs (41 a, 41b) herangezogen werden, die jeweils mit einem strukturierten Helligkeitsmuster versehen sind.

6. Verfahren nach Anspruch 5, **dadurch gekennzeichnet, dass** die Kameras (1a, 1 b) und oder die Positionierungskameras (2a, 2b) im Inneren des Flügels (31) angeordnet werden und die Digitalbilder (7a, 7b), und gegebenenfalls auch die Positionierungs-Digitalbilder (6), durch Fenster (9) im Flügel (31 a, 31b) hindurch aufgenommen werden.

7. Verfahren nach einem der vorangehenden Ansprüche, **dadurch gekennzeichnet, dass** zumindest eine der auf einem Träger (3a, 3b) befestigten Kameras ein Beschleunigungsdetektor (21) zugeordnet und mit dieser starr verbunden ist, wobei der Beschleunigungsdetektor (21) eine Veränderung der Position und/oder Ausrichtung der Kamera (1a, 1b) misst und dass die so ermittelte Positionsänderung oder Änderung der Ausrichtung oder jeweiligen Ausrichtung und/oder Relativposition überlagert und bei der Erstellung des Stereo-Abbildes herangezogen wird.

8. Aufnahmeanordnung zur Erstellung von Stereo-Digitalbildern (101) mit zumindest zwei Kameras (1a, 1b), einem Referenzobjekt (5), wobei die Kameras (1a, 1b) einen überlappenden Aufnahmebereich (R) aufweisen und mit dem Referenzobjekt (5) verbunden sind, wobei zumindest eine der Kameras (1a, 1b) mittels eines deformierbaren Trägers (3a, 3b) mit dem Referenzobjekt (5) verbunden ist, und die gegebenenfalls vorhandenen übrigen Kameras (1 a, 1 b) starr mit dem Referenzobjekt (5) verbunden sind, **dadurch gekennzeichnet,**
- **dass** die zumindest eine am Träger (3a, 3b) angeordnete Kamera (1a, 1b) eine Positionserkennungseinrichtung (2a, 2b) aufweist und mit dieser starr verbunden ist, wobei die Positionserkennungseinrichtung (2a, 2b) auf einen Abschnitt (4a, 4b) des Referenzobjektes (5) gerichtet ist, der ein strukturiertes Helligkeitsmuster aufweist,
- **dass** die Positionserkennungseinrichtung (2a, 2b) zur Erstellung eines Positionierungs-Digitalbilds (6) des Abschnitts (4) ausgebildet ist,
- **dass** die Positionserkennungseinrichtung (2a, 2b) dazu ausgebildet ist, bei Vorliegen eines Positionierungs-Digitalbilds (6) aufgrund der Position, Größe und Lage des Abbilds des strukturierten Helligkeitsmusters des Abbilds des Abschnitts (4) im Positionierungs-Digitalbild (6) die Relativposition und Ausrichtung der jeweiligen Positionserkennungseinrichtung (2a, 2b) sowie der jeweils mit ihr verbundenen Kamera (1a, 1b) zum Referenzobjekt (5) zu ermitteln,
- **dass** die, insbesondere gleichzeitig erstellten, Signale der Positionserkennungseinrichtung (2a, 2b) sowie der Kameras (1a, 1b) einer Stereo-Einheit (100) zuführbar sind und für gegebenenfalls starr mit dem Referenzobjekt (5) verbundene Kameras eine feste Ausrichtung und Relativposition gegenüber dem Referenzobjekt der Stereo-Einheit (100) zuführbar sind, und
- **dass** die Stereo-Einheit (100) dazu ausgebildet ist, bei Vorliegen der ermittelten Relativpositionen und Ausrichtungen der einzelnen Kameras (1a, 1b) die jeweiligen Relativposition und Ausrichtung der Kameras (1a, 1b) zueinander zu ermitteln, und
- die Relativposition und Ausrichtung der Kameras (1a, 1b) zueinander für die Bestimmung einer Stereobasis heranzuziehen und mit dieser Stereobasis ein dreidimensionales Abbild der von den Kameras (1a, 1b) abgebildeten Szene zu erstellen.

9. Aufnahmeanordnung nach Anspruch 8, **dadurch gekennzeichnet, dass** die Positionserkennungseinrichtung (2a, 2b) als Positionierungskamera (2a, 2b) ausgebildet ist, die auf den Abschnitt (4) des Referenzobjektes (5) gerichtet ist und dass die Positionserkennungseinrichtung (2a, 2b) dazu ausgebildet ist, das Positionierungs-Digitalbild (6) zu erstellen.

10. Aufnahmeanordnung nach Anspruch 8, **dadurch gekennzeichnet, dass** die Positionserkennungseinrichtung (2a, 2b) einen Teilbereich (9) des Sensors der Kamera (1) sowie ein Spiegel (8) aufweist, der mit der jeweiligen Kamera (1a, 1b) starr verbunden ist, wobei die Sehstrahlen der jeweiligen Kamera (1a, 1b) vom Spiegel (8) in den Teilbereich (9) des Sensors der jeweiligen Kamera (1a, 1b) gerichtet sind,
- wobei gegebenenfalls die Positionserkennungseinrichtung (2a, 2b) dazu ausgebildet ist, das Positionierungs-Digitalbild vom Teilbereich (9) des Sensors der jeweiligen Kamera (1a, 1b) zu erstellen.

11. Stereo-Aufnahmeanordnung nach einem der Ansprüche 8 bis 10, **dadurch gekennzeichnet, dass** die beiden Flügel (31a, 3ab) eines Flugzeugs die Träger (3a, 3b) bildet und auf diesen die Kameras (1a, 1b) montiert sind und dass die Abschnitte (4a, 4b) durch Abschnitte am Rumpf des Flugzeugs (41 a, 41b) ausgebildet sind, die jeweils mit ein strukturiertes Helligkeitsmuster aufweisen.

12. Stereo-Aufnahmeanordnung nach einem der Ansprüche 8 bis 11, **dadurch gekennzeichnet, dass** die Positionierungskameras (2a, 2b) im Inneren des Flügels (31 a, 31 b) des Flugzeugs angeordnet sind, wobei für jede der Kameras jeweils ein Fenster (9) im Flügel (31 a, 31 b) vorgesehen ist und der Aufnahmebereich durch das Fenster (9) hindurchtritt.

13. Stereo-Aufnahmeeinrichtung nach einem der vorangehenden Ansprüche 8 bis 12, **dadurch gekennzeichnet, dass** zumindest einer der auf einem Träger (3a, 3b) befestigten Kameras ein Beschleunigungsdetektor (21) angeordnet und mit dieser starr verbunden ist, wobei der Beschleunigungsdetektor (21) dazu ausgebildet ist, eine Veränderung der Position und/oder Ausrichtung der Kamera (1a, 1b) zu messen und dass die Stereo-Einheit (100) dazu ausgebildet ist, die so ermittelte Positionsänderung oder Änderung der Ausrichtung oder jeweiligen Ausrichtung und/oder Relativposition zu überlagern und bei der Erstellung des Stereo-Digitalbilds (101) heranzuziehen.

14. Datenträger, auf dem ein Programm zur Durchführung eines Verfahrens gemäß einem der Ansprüche 1 bis 7 abgespeichert ist.

## Claims

1. A method for the creation of stereo digital images (9) with at least two cameras (1a, 1b), which have an overlapping recording area, wherein the cameras (1a, 1b) are connected with a reference object (5), wherein at least one of the cameras is connected with the reference object (5) by means of a deformable carrier (3a, 3b), and the, if applicable, existing other cameras are rigidly connected with the reference object (5), **characterized in**
- **that** the at least one camera (1) arranged on the carrier (3a, 3b) is connected rigidly with a position detection device (2a, 2b), wherein a section (4) of the reference object (5) is pictured with the position detection device (2a, 2b), which reference object (5) has a structured brightness pattern,
- **that** a positioning digital image (6) of the section (4) is created with the position detection device (2a, 2b),
- on the basis of the position, size and location of the image of the structured brightness pattern of the image of the section (4) in the positioning digital image (6a , 6b) the relative position and orientation of the respective position detection device (2a, 2b) as well as of the camera (1 a, 1 b) connected in each case with it is determined relative to the reference object (5),
- **that** for the cameras (1 a, 1 b) arranged on the carrier (3a, 3b) in each case a digital image (7a, 7b) is created, to which in each case the relative position and orientation of the camera (1a, 1b) creating the respective digital image (7a, 7b) is assigned, in particular, at the time of the recording, and for cameras, if applicable, rigidly connected with the reference object (5) a fixed orientation and relative position is created relative to the reference object (5),
- **that** on the basis of the determined relative positions and orientations of the individual cameras (1 a, 1 b) the respective relative position and orientation of the cameras (1 a, 1 b) is determined relative to each other, and
- **that** the relative position and orientation of the cameras (1 a, 1 b) to each other is used for the determination of a stereo base and with said stereo base a three-dimensional image is created of the scene pictured by the cameras (1 a, 1 b).

2. A method according to Claim 1, **characterized in that** a positioning camera (2a, 2b) is used as a position detection device (2a, 2b), which is directed at the section (4) of the reference object (5) and that the positioning digital image (6) is created with the positioning detection device (2a, 2b).

3. A method according to Claim 1, **characterized in that** a subarea (9) of the sensor of the camera (1) as well as a mirror (8a, 8b) is used as a position detection device (2a, 2b), which is rigidly connected with the respective camera (1 a, 1 b), wherein the rays of the respective camera (1 a, 1 b) are guided by the mirror (8) into the subarea (70a, 70b) of the sensor of the respective camera (1 a, 1 b), wherein the positioning digital image is created of the subarea (70a, 70b) of the sensor of the respective camera (1 a, 1 b) and the digital image (7a, 7b) is created of the remaining part (71 a, 71 b) of the sensor of the respective camera (1a, 1b).

4. A method according to one of the preceding claims, **characterized in that** the relative position and the orientation of the cameras (1 a, 1 b) to each other is determined taking into consideration the determined relative position and orientation (1a) to in each case a section (4a, 4b) on the reference object (5) as well as taking into consideration the relative position and orientation, assumed to be unchanged, of the sections (4a, 4b) on the reference object (5) to each other, and that in particular the relative position and orientation of the respective mirror (8a, 8b) or of the respective positioning camera (2a, 2b) relative to the respective camera (1a, 1b) is used in the determination of the orientation of the two cameras (1a, 1b).

5. A method according to one of the preceding claims **characterized in that** the two wings (31a, 31b) of an aircraft are used as carriers (3a, 3b), on which in each case the cameras (1a, 1b) are mounted and that sections (4a, 4b) on the fuselage of the aircraft (41a, 41b) functioning as a reference object (5) are used as sections (4a, 4b), which in each case are provided with a structured brightness pattern.

6. A method according to Claim 5, **characterized in that** the cameras (1 a, 1 b) and/or the positioning cameras (2a, 2b) are arranged inside the wing (31) and the digital images (7a, 7b), and, if applicable, also the positioning digital images (6) are recorded through the window (9) in the wing (31 a, 31 b).

7. A method according to one of the preceding claims, **characterized in that** at least one of the cameras mounted on a carrier (3a, 3b) is assigned an acceleration detector (21) and is rigidly connected with the latter, wherein the acceleration detector (21) measures a change of the position and/or orientation of the camera (1 a, 1 b) and that the positioning change or change of the orientation or respective orientation and/or relative position thus determined is superimposed and is used in the creation of the stereo picture.

8. A recording arrangement for the creation of stereo digital images (101) with at least two cameras (1 a, 1 b), a reference object (5), wherein the cameras (1 a, 1 b) have an overlapping recording area (R) and are connected with the reference object (5), wherein at least one of the cameras (1 a, 1 b) is connected by means of a deformable carrier (3a, 3b) with the reference object (5), and the, if applicable, existing other cameras (1 a, 1 b) are rigidly connected with the reference object (5),
**characterized in**
- **that** the at least one camera (1 a, 1 b) arranged on the carrier (3a, 3b) has a position detection device (2a, 2b) and is connected rigidly with the latter, wherein the position detection device (2a, 2b) is directed at a section (4a, 4b) of the reference object (5), which has a structured brightness pattern,
- **that** the position detection device (2a, 2b) is designed for the creation of a positioning digital image (6) of the section (4),
- **that** the position detection device (2a, 2b) is designed to determine the relative position and orientation of the respective position detection device (2a, 2b) as well as of the camera (1 a, 1b) connected in each case with it to the reference object (5), when a positioning digital image (6) exists, on the basis of the position, size and location of the image of the structured brightness pattern of the image of the section (4) in the positioning digital image (6),
- **that** the, in particular, simultaneously created, signals of the position detection device (2a, 2b) as well as of the cameras (1a, 1b) can be supplied to a stereo unit (100) and for, if applicable, cameras connected rigidly with the reference object (5) a fixed orientation and relative positon relative to the reference object can be supplied to the stereo unit (100) and
- **that** the stereo unit (100) is designed when the determined relative positions and orientations of the individual cameras (1a, 1b) exist to determine the respective relative position and orientation of the cameras (1a, 1b) to each other, and
- to use the relative position and orientation of the cameras (1a, 1b) to each other for the determination of a stereo base and with said stereo base to create a three-dimensional picture of the scene pictured by the cameras (1a, 1b).

9. A recording arrangement according to Claim 8, **characterized in that** the position detection device (2a, 2b) is designed as a positioning camera (2a, 2b), which is directed at the section (4) of the reference object (5) and that the position detection device (2a, 2b) is designed to create the positioning digital image (6).

10. A recording arrangement according to Claim 8, **characterized in that** the position detection device (2a, 2b) has a subarea (9) of the sensor of the camera (1) as well as a mirror (8), which is rigidly connected with the respective camera (1 a, 1 b), wherein the ray of the respective camera (1 a, 1 b) is directed by the mirror (8) into the subarea (9) of the sensor of the respective camera (1 a, 1 b),
- wherein, if applicable, the position detection device (2a, 2b) is designed to create the positioning digital image of the subarea (9) of the sensor of the respective camera (1a, 1 b).

11. A stereo recording arrangement according to one of Claims 8 to 10, **characterized in that** the two wings (31 a, 31 b) of an aircraft form the carriers (3a, 3b) and the cameras (1 a, 1 b) are mounted on the latter and that the sections (4a, 4b) are formed by sections on the fuselage of the aircraft (41a, 41b), which in each case have a structured brightness pattern.

12. A stereo recording arrangement according to Claims 8 to 11, **characterized in that** the positioning cameras (2a, 2b) are arranged inside the wing (31 a, 31 b) of the aircraft, wherein for each of the cameras in each case a window (9) is provided in the wing (31a, 31 b) and the recording area passes through the window (9).

13. A stereo recording arrangement according to one of the preceding Claims 8 to 12 **characterized in that** at least one of the cameras mounted on a carrier (3a, 3b) is assigned an acceleration detector (21) and is connected rigidly to the latter, wherein the acceleration detector (21) is designed to measure a change of the position and/or orientation of the camera (1a, 1b) and that the stereo unit (100) is designed to superimpose the thus determined position change or change of the orientation or respective orientation and/or relative position and to use it in the creation of the stereo digital image (101).

14. A data carrier, on which a program is stored for the implementation of a method according to one of Claims 1 to 7.

## Revendications

1. Procédé d'établissement d'images numériques stéréos (9) avec au moins deux caméras (1a, 1b) qui présentent une zone d'enregistrement de chevauchement, les caméras (1a, 1b) étant raccordées à un objet de référence (5), au moins une des caméras étant raccordée à l'objet de référence (5) au moyen d'un support (3a, 3b) déformable, et les autres caméras éventuellement présentes étant raccordées de façon rigide à l'objet de référence (5),
**caractérisé en ce que**
- la caméra (1) au moins au nombre de un disposée sur le support (3a, 3b) est raccordée de façon rigide à un dispositif de détection de position (2a, 2b), un tronçon (4) de l'objet de référence (5) qui présente un motif de luminosité structuré étant représenté avec le dispositif de détection de position (2a, 2b),
- une image numérique de positionnement (6) du tronçon (4) est établie avec le dispositif de détection de position (2a, 2b),
- la position relative et l'orientation du dispositif de détection de position (2a, 2b) respectif ainsi que de la caméra (1a, 1b) qui lui raccordée par rapport à l'objet de référence (5) sont déterminées sur la base de la position, de la grandeur et de l'emplacement de la reproduction du motif de luminosité structuré du tronçon (4) dans l'image numérique de positionnement (6a, 6b),
- pour les caméras (1a, 1b) disposées sur le support (3a, 3b), il est respectivement établi une image numérique (7a, 7b) à laquelle sont respectivement affectées la position relative et l'orientation de la caméra (1a, 1b) établissant l'image numérique (7a, 7) respective, en particulier au moment de l'enregistrement, et une orientation et position relative fixes par rapport à l'objet de référence (5) sont réglées pour des caméras éventuellement raccordées de façon rigide à l'objet de référence (5),
- la position relative et l'orientation respectives des caméras (1a, 1b) les unes par rapport aux autres sont déterminées sur la base des positions relatives et orientations déterminées des différentes caméras (1a, 1b), et
- il est fait appel à la position relative et à l'orientation des caméras (1a, 1b) les unes par rapport aux autres pour la définition d'une base stéréo, et une représentation en trois dimensions de la scène reproduite par les caméras (1a, 1b) est établie avec cette base stéréo.

2. Procédé selon la revendication 1, **caractérisé en ce que**, en tant que dispositif de détection de position (2a, 2b), il est utilisé une caméra de positionnement (2a, 2b) qui est dirigée vers le tronçon (4) de l'objet de référence (5), et **en ce que** l'image numérique de positionnement (6) est établie avec le dispositif de détection de position (2a, 2b).

3. Procédé selon la revendication 1, **caractérisé en ce que**, en tant que dispositif de détection de position (2a, 2b), il est utilisé une zone partielle (9) du capteur de la caméra (1) ainsi qu'un miroir (8a, 8b) qui est raccordé de façon rigide à la caméra (1a, 1b), les rayons visuels de la caméra (1a, 1b) respective étant guidés par le miroir (8) dans la zone partielle (70a, 70b) du capteur de la caméra (1a, 1b) respective, l'image numérique de positionnement étant établie par la zone partielle (70a, 70b) du capteur de la caméra (1a, 1b), et l'image numérique (7a, 7b) étant établie par la partie restante (71a, 71b) du capteur de la caméra (1a, 1b) respective.

4. Procédé selon l'une des revendications précédentes, **caractérisé en ce que** la position relative et l'orientation des caméras (1a, 1b) les unes par rapport aux autres sont établies en prenant en compte la position relative et l'orientation (1a) déterminées par rapport à respectivement un tronçon (4a, 4b) sur l'objet de référence (5) ainsi qu'en prenant en compte la position relative et l'orientation, supposées invariables, des tronçons (4a, 4b) sur l'objet de référence (5) les uns par rapport aux autres, et **en ce que**, en particulier lors de la définition de l'orientation des deux caméras (1a, 1b), il est fait appel à la position relative et à l'orientation du miroir (8a, 8b) respectif ou de la caméra de positionnement (2a, 2b) respective par rapport à la caméra (1a, 1b) respective.

5. Procédé selon l'une des revendications précédentes, **caractérisé en ce que**, en tant que support (3a, 3b), il est fait appel aux deux ailes (31a, 31b) d'un avion, sur lesquelles respectivement les caméras (1a, 1b) sont montées, et **en ce que**, en tant que tronçons (4a, 4b), il est fait appel à des tronçons (4a, 4b) sur le fuselage de l'avion (41a, 41b) fonctionnant en tant qu'objet de référence (5) qui sont respectivement munis d'un motif de luminosité structuré.

6. Procédé selon la revendication 5, **caractérisé en ce que** les caméras (1a, 1b) et/ou les caméras de positionnement (2a, 2b) sont disposées à l'intérieur de l'aile (31), et les images numériques (7a, 7b), et éventuellement également les images numériques de positionnement (6), sont enregistrées à travers des fenêtres (9) dans l'aile (31a, 31b).

7. Procédé selon l'une des revendications précédentes, **caractérisé en ce qu'**au moins un détecteur d'accélération (21) est affecté à une des caméras fixées sur un support (3a, 3b) et raccordé de façon rigide à celle-ci, le détecteur d'accélération (21) mesurant une variation de la position et/ou de l'orientation de la caméra (1a, 1b), et **en ce que** la variation de position ou variation ainsi déterminée de l'orientation ou de l'orientation respective et/ou de la position relative est superposée et est utilisée lors de l'établissement de la représentation stéréo.

8. Dispositif d'enregistrement pour l'établissement d'images numériques stéréos (101) avec au moins deux caméras (1a, 1b), un objet de référence (5), les caméras (1a, 1b) présentant une zone d'enregistrement de chevauchement (R) et étant raccordées à l'objet de référence (5), au moins une des caméras (1a, 1b) étant raccordée à l'objet de référence (5) au moyen d'un support (3a, 3b) déformable, et les autres caméras (1a, 1b) éventuellement présentes étant raccordées à l'objet de référence (5),
**caractérisé en ce que**
- la caméra (1a, 1b) au moins au nombre de un disposée sur le support (3a, 3b) présente un dispositif de détection de position (2a, 2b) et est raccordée de façon rigide à celui-ci, le dispositif de détection de position (2a, 2b) étant dirigé vers un tronçon (4a, 4b) de l'objet de référence (5) qui présente un motif de luminosité structuré,
- le dispositif de détection de position (2a, 2b) est constitué pour l'établissement d'une image numérique de positionnement (6) du tronçon (4),
- le dispositif de détection de position (2a, 2b) est constitué pour, en présence d'une image numérique de positionnement (6), déterminer, sur la base de la position, de la grandeur et de l'emplacement de la représentation du motif de luminosité structuré de la représentation du tronçon (4) dans l'image numérique de positionnement (6), la position relative et l'orientation du dispositif de détection de position (2a, 2b) respectif ainsi que de la caméra (1a, 1b) qui lui est respectivement raccordée par rapport à l'objet de référence (5),
- les signaux, en particulier établis simultanément, du dispositif de détection de position (2a, 2b) ainsi que des caméras (1a, 1b) peuvent être acheminés à une unité stéréo (100) et, pour des caméras éventuellement raccordées de façon rigide à l'objet de référence (5), une orientation et position relative fixes par rapport à l'objet de référence (5) peuvent être conduites à l'unité stéréo (100), et
- l'unité stéréo (100) est constituée pour, en présence des positions relatives et orientations déterminées des différents caméras (1a, 1b), déterminer la position relative et l'orientation respectives des caméras (1a, 1b) les unes par rapport aux autres et,
- pour faire appel à la position relative et à l'orientation des caméras (1a, 1b) les unes par rapport aux autres pour la définition d'un base stéréo et pour, avec cette base, établir une représentation en trois dimensions de la scène reproduite par les caméras (1a, 1b).

9. Dispositif d'enregistrement selon la revendication 8, **caractérisé en ce que** le dispositif de détection de position (2a, 2b) est constitué en tant que caméra de positionnement (2a, 2b) qui est dirigée vers le tronçon (4) de l'objet de référence (5), et **en ce que** le dispositif de détection de position (2a, 2b) est constitué pour établir l'image numérique de positionnement (6).

10. Dispositif d'enregistrement selon la revendication 8, **caractérisé en ce que** le dispositif de détection de position (2a, 2b) présente une zone partielle (9) du capteur de la caméra (1) ainsi qu'un miroir (8) qui est raccordé de façon rigide à la caméra (1a, 1b) respective, les rayons visuels de la caméra (1a, 1b) respective étant dirigés par le miroir (8) dans la zone partielle (9) du capteur de la caméra (1a, 1b) respective,
- le dispositif de détection de position (2a, 2b) étant éventuellement constitué pour établir l'image numérique de positionnement de la zone partielle (9) du capteur de la caméra (1a, 1b) respective.

11. Dispositif d'enregistrement stéréo selon l'une des revendications 8 à 10, **caractérisé en ce que** les deux ailes (31a, 31b) d'un avion forment les supports (3a, 3b) et les caméras (1a, 1b) sont montées sur ceux-ci, et **en ce que** les tronçons (4a, 4b) sont constitués de tronçons sur le fuselage de l'avion (41a, 41b) qui présentent respectivement un motif de luminosité structuré.

12. Dispositif d'enregistrement stéréo selon l'une des revendications 8 à 11, **caractérisé en ce que** les caméras de positionnement (2a, 2b) sont disposées à l'intérieur de l'aile (31a, 31b) de l'avion, une fenêtre (9) étant respectivement prévue dans l'aile (31a, 31b), et la zone d'enregistrement traversant la fenêtre (9).

13. Dispositif d'enregistrement stéréo selon l'une des revendications 8 à 12, **caractérisé en ce qu'**au moins un détecteur d'accélération (21) est disposé à au moins une des caméras fixées sur le support (3a, 3b) et raccordé à celle-ci de façon rigide, le détecteur d'accélération (21) étant constitué pour mesurer une variation de la position et/ou de l'orientation de la caméra (1a, 1b), et **en ce que** l'unité stéréo (100) est constituée pour superposer la variation de position ou variation ainsi déterminée de l'orientation ou de l'orientation respective et/ou de la position relative et pour y faire appel lors de l'établissement de l'image numérique stéréo (101).

14. Support de données sur lequel est stocké un programme destiné à la réalisation d'un procédé selon l'une des revendications 1 à 7.
